# EUROPEAN PATENT APPLICATION

(11) **EP 4 592 991 A1**
(43) Date of publication of application: **30.07.2025**
(21) Application number: 24215357.5
(22) Date of filing: 26.11.2024
(51) Int. Cl.: G09F 7/18, G09F 21/04

(54) **A RELEASABLY ATTACHABLE SIGN DISPLAY DEVICE**

(30) Priority: 24.01.2024 SE 2430027
(71) Applicant: Majakliniken AB, 79172 Falun (SE)
(72) Inventor: LISS, Olle, 79172 Falun (SE)
(74) Representative: Bjerkén Hynell KB

(57) **Abstract**

This invention relates to a releasably attachable sign display device (2), comprising
a holding body part (20) and a fastening body part (21) arranged to be releasably attachable to each other by means of a releasable attachment arrangement (21A, 21B)
wherein said holding body part (20) is arranged with at least one sign holding member (5) arranged to securely hold a sign against an outer surface (202) of said holding body part (20), wherein said fastening body part (21) includes a second gripping member (210) arranged to grip around a first horizontal edge of a vehicle registration sign and that said holding body part (20) includes a first gripping member (200) arranged to grip around an opposite second horizontal edge of said vehicle registration sign, wherein said releasable attachment arrangement (21A, 20B) is arranged to securely fasten the sign display device (2) to a vehicle.

## Description

### TECHNICAL FIELD

The present invention relates to a releasably attachable sign display, releasably attachable to a vehicle.

### BACKGROUND OF THE INVENTION

There are known many different kinds of releasably attachable sign displays that are releasably attachable to a vehicle. A frequent use thereof is to temporarily fasten a "LEARNER" (ÖVNINGSKÖR) sign on a vehicle when coaching a person how to drive. Sign displays of a magnetic kind are frequently used. However many modern cars, especially cars having a back hatch, do not have sufficient magnetic space to securely keep the display sign fastened when driving and or does not provide sufficient magnetic force, e.g. due to dirt. Hence, it often occurs that magnetic display signs are lost, which of course is undesired, but which also may cause accidents due to not displaying "LEARNER", which is supposed to alert other drivers.

There are known a variety of releasably attachable sign displays, wherein mechanical means are used to attach it to a vehicle, e.g. from US 20150128464 there is known a sign display fastener that is releasably attachable by means of a tension clip, wherein the fastener configuration forms a slide-in region, a reception pocket and the tension clip communicating therebetween, enabling releasable attachment to a rim of a trunk hatch or similar device of a car. Further, from GB 2382838 there is known a similar arrangement wherein releasable attachment is arranged at a registration plate.

However, existing known a releasably attachable sign displays are all disadvantages for some reason, e.g. due to bulkiness and/or difficulty to attach the sign display fasteners and/or difficulty to exchange sign of the sign display fastener.

Moreover, from GB 2475691 there is a known a sign display, wherein attachment is arranged at a registration plate, in a fixed manner, i.e. not releasably.

### SUMMARY OF THE INVENTION

It is an object of the invention to provide a releasably attachable sign display that eliminates or at least minimizes existing problems with known sign display fasteners, which is achieved by means of a releasably attachable sign display device as defined in claim 1.

Thanks to the invention there is provided a releasably attachable sign display device that is compact in its design and easy to attach to a vehicle and wherein exchange/release/attachment of a sign thereto is easily performed.

### BRIEF DESCRIPTION OF THE DRAWINGS

In the following the invention will be described with reference to some preferred embodiments shown in the enclosed figures, wherein,
FIG. 1 is a perspective of a holding body part of releasably attachable sign display device according to one exemplary embodiment of the present invention,
FIG. 2 the same as Fig. 1 in another perspective,
FIG. 3 is a perspective view of a fastening body part of an exemplary embodiment of one releasably attachable sign display device of the present invention,
FIGS. 4 is a perspective view showing the body parts of figures 1, 2 and 3 in a connected arrangement,
FIG. 5 is a perspective view showing a pair of releasably attachable sign display devices with body parts presented in figures 1, 2 and 3 having a sign attached thereto,
FIG. 6 shows the assembly of figure 5 attached to a registration sign in accordance with the present invention,
FIG. 7 shows a modified embodiment according to the invention,
FIG. 8 is a perspective view of a second embodiment of a fastening body part of a second exemplary embodiment of one releasably attachable sign display device of the present invention,
FIGS. 9 and 10 are perspective views of a second embodiment of a holding body part of releasably attachable sign display device according to a second exemplary embodiment of the present invention
FIGS. 11 is a perspective view showing the body parts of figures 8, 9 and 10 in a connected arrangement, and
FIG. 12 is a perspective view showing a pair of releasably attachable sign display devices with body parts presented in figures 8, 9 and 10 having a sign attached thereto,

### DETAILED DESCRIPTION OF THE INVENTION

The following detailed description is of the best currently contemplated modes of carrying out exemplary embodiments of the invention. The description is not to be taken in a limiting sense but is made merely for the purpose of illustrating the general principles of the invention, since the scope of the invention is best defined by the appended claims.

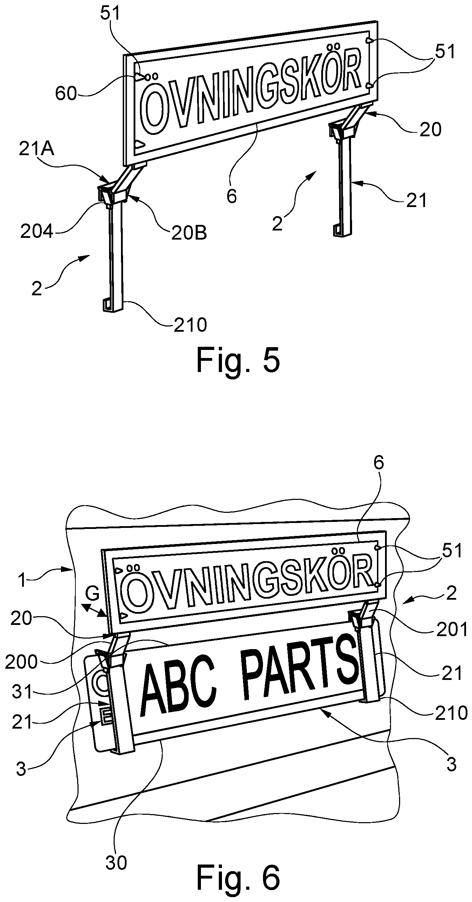

In Fig. 6 there is shown a car 1 having a registration plate 3, wherein there are two releasably attachable sign display devices 2 releasably attached to the registration plate 3. Further, is shown that each releasably attachable sign display device 2 comprises a holding body portion 202 and a fastening body portion 212, which both basically extending in a vertical plane VP.

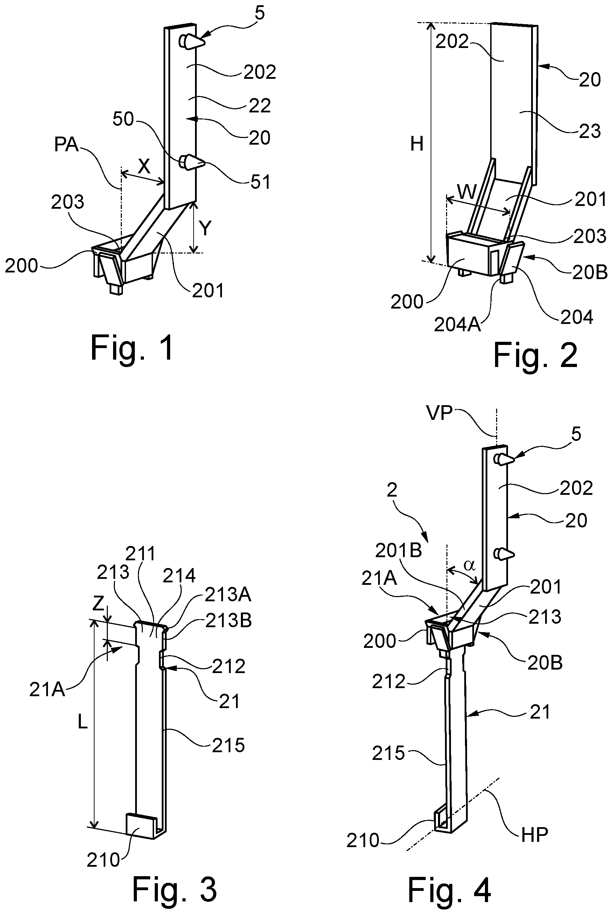

In Figs. 1 and 2 there are shown different perspective views of the holding body part 20, which is arranged with holding members 5 arranged to releasably enable attachment of a sign 6 (see Fig. 5). The holding members 5 preferably provides a kind of snap-in function, e.g. by having a conical outer body 51 on top of a stem 50. The conical outer body 51 is preferably compressible and the sign 6 is preferably arranged with holes 60, such that the sign may easily be attached to the by means of pressing the conical outer body 51 into and through the holes 60, such that the sign 6 is securely attached to the releasably attachable sign display device 2. By having conical outer body 51 compressively the sign is thereafter easily released, if desired. As can be noted there is use of a pair of the releasably attachable sign display device 2 to securely hold the sign 6, i.e. the sign having holes 60 adjacent each end thereof, preferably a pair of holes 60 interfitting with a pair of holding members 5 on each holding body part 20.

Further, in Figs. 1 and 2 there is shown that the holding body part 20 comprises of three body portions, a holding body portion 202 that is positioned at one end thereof and a first gripping member 200, preferably having a U-shape, that is positioned at another end and there between an intermediate distance body portion 201. The intermediate distance body portion 201 has its purpose to create a distance X away outwardly from a vertical plane PA for attachment of holding body part 20. This distance X is advantageous due to facilitating a gap G (see Fig. 6) between the surface of the vehicle 1 and the holding body portion 202. Preferably the distance body portion 201 includes supporting side panels 210A and extends along a plane that presents an angle α between the vertical plane PA and its center plane, which angle α preferably is in the range of 30°-70°. Thanks to presenting an acute angle α, of less than 90°, there will also be achieved a distance Y between the lower edge of the holding body portion 202 and the upper edge of the first gripping member 200, which preferably is in the range of 10-100 mm.

Moreover, it is shown that the holding body part 20 at the same level as the first gripping member 200 includes a neighboring body portion that includes a passage 203, preferably rectangular, that together with at least one resilient locking device 204 form a first half 20B of a releasable locking arrangement 20B, 21A. Preferably the first gripping member 200 and the neighboring body portion form an integral body.

In Fig. 3 there is shown a fastening body part 21, which forms a second body part of the releasably attachable sign display device 2. At one end thereof there is a second gripping member 210 which preferably also has a U-shape. The U-shape safeguards secure gripping around an edge of the registration sign 3. At the other end there is male attachment device 21A. As shown, preferably the male attachment device 21A includes a snap in and stop member 213 intended to interact with the passage 203 to loosely keep the two body parts 20, 21 connected, by providing a snap-in function of the male attachment device 21A in the passage 203. The position of the snap in and stop member 213 is preferably arranged adjacent the upper edge of the male attachment device 21A. The shown snap in and stop member 213 includes at least one resilient leg member 213B with a protrusion 213A, which resiliently may interact with the passage 203, e.g. by providing a gap 214 between the leg member 213B and a central body portion 211 or merely by making the protrusion 213A resilient per se, e.g. a spring actuated ball.

Further it shown that the male attachment device 21A includes at least one interacting member 212 that may interact with the resilient locking device 204, preferably to provide an adjustable locking function, preferably merely in one direction, in interaction with the resilient locking device 204 of the female attachment device 20B. Preferably said interacting member 212 is arranged along at least one side edge 215 of the male attachment device 21A, e.g. in the form of a serrated surface that step wise may interact with a protruding edge 204A of the resilient locking device 204 of the female attachment device 20B. Preferably the interacting member 212 is positioned a distance Z below the snap in and stop member 213 and thereby preferably also below the upper edge of the male attachment device 21A, such that there may be obtained a greater distance between the gripping members 200, 210 in a lose connected state, merely using the snap in and stop member 213, and a smaller distance between the gripping members 200, 210 when the resilient locking device 204 locks into the interacting member 212. Preferably the protruding edge 204A of the resilient locking device 204 and the serrated surface of the interacting member 212 will be formed such that an "automatic locking function" is achieved against movement in an opening direction, such that a desired locking function around the edges 30,31 of a registration sign is easily achieved merely by pushing the two parts 20, 21 tighter into engagement. To achieve release/opening the resilient locking device 204 (or members) are pressed/pivoted such that the protruding edge 204A comes out of contact with the interacting member 212 (e.g. serrated surface) whereby release/opening is easily achieved.

Hence, the length L of fastening body part 21 is preferably longer than the height of a registration sign 3, such that when the snap in and stop device 213 has connected with the passage 203 the distance between the first gripping body portions 200 and second gripping member 210 is such that there will be sufficient distance to easily position (hung onto the upper edge 31) the releasably attachable sign display device 2 onto the registration sign 3, whereafter the releasably attachable sign display device 2 may be locked onto the registration sign 3 by further pushing the male attachment device 21A into the passage 203 whereby interaction between the interacting member 212 and resilient locking device 204 will arrange for having first and second gripping members 200, 210 securely gripping around the edges 30, 31(see Fig. 6) of the registration sign 3.

In Fig 4 it is shown an example of how the two body parts 20, 21 may first be loosely connected by means of having the snap in and stop device 213 passed through the passage 213 such that the fastening body part 21 hangs loosely below the holding body 20, whereafter locking at a registration sign 3 may easily be achieved by activating the locking arrangement 21A, 21B. Moreover, it is shown that the holding members 5 are positioned such that a major part of the sign 6 may not cover the registration sign 3, i.e. reading of the letters/numbers on the registration sign 3 is not hindered.

In Fig. 5 there is shown two releasably attachable sign display devices 2 being attached to a learner sign 6 by means of having the holding members 5 pushed into holes 60 of the sign and releasably locked to the outer surface 22 of each releasably attachable sign display devices 2. In this situation the unit may be securely attached onto a registration sign 3, by first having hanged an upper gripping portion 200 positioned onto the upper edge 31 of the registration sign 3 in a non-locked state, but merely connected by the snap in and stop mechanism 213, 203 and thereafter locked onto the registration sign 3 by pushing the fastening body part 21 and holding body part 20 closer to each other to thereby reduce the distance between the first gripping member 200 and the second gripping member 210 and arrange for the resilient locking device 204 to lock into the interacting member 212 whereby it will safely be attached onto the registration sign 3.

In Fig. 6 there is shown a view where the 2 with the 6 have been securely attached to a registration sign 3 whereby the second gripping member 210 of the fastening body part 21 locks around the lower edge 30 of the registration sign 3 and the second first gripping member 200 locks around the upper edge 31 of the registration sign 3. It shows that preferably the body of fastening body part 21 is transparent, such that the letters/numbers of the registration sign 3 may be seen through the body of fastening body part 21. Further, it is shown that the distance body portion 201 may extend outwardly to achieve a desired gap G.

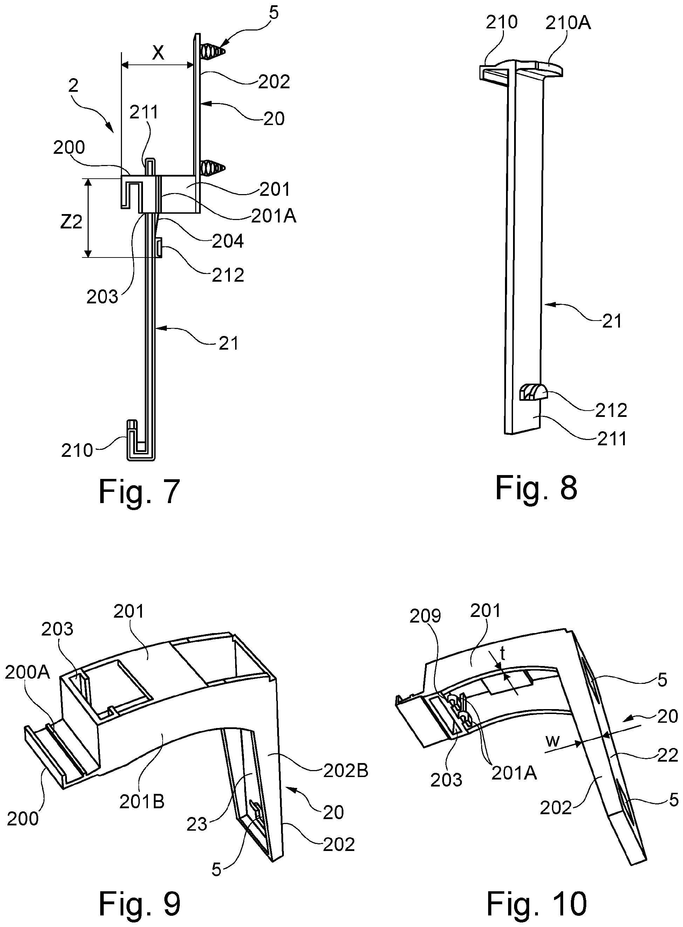

In fig. 7 there is shown a side view of a modified embodiment according to the invention, wherein most features are the same as described above and in the following therefore there will be a focus on modified aspects. Firstly it can be noted that the releasable attachment arrangement 21A, 20B is different. Here the interacting member 212 is in the form of a with holding device, e.g. in form of a button like device, that is fixated onto the fastening body part 21 and that with holds one part of a resilient locking device 204, in the form of a resilient string (e.g. rubber band). The other part of the resilient locking device 204 is anchored adjacent the upper end of the gripping member 200 adjacent the female attachment device 20B at an anchoring device 201A, e.g. anchored within a groove. The anchoring device 201A is preferably arranged in a body portion that is integral with the gripping member 200. As is evident the function of the modified releasable attachment arrangement 21A, 20B is basically similar to what is described above, i.e. the interaction of the resilient locking device 204 and the interacting member 212 will create a resilient force urging to diminish the distance between the gripping members 200, 210, such that once in place onto a registration sign 3 it will urge to keep each releasably attachable sign display device 2 in place. To detach the releasably attachable sign display devices 2 a pulling force is to be applied, e.g. to the fastening body part 20, whereby one of the gripping members will be moved out of contact with the edge of the registration sign 3. Further, it is shown that the distance body portion 201 may extend a distance X outwardly without any angle to achieve a desired gap G. Moreover, it is shown that the holding members 5 are positioned such that a major part of the sign 6 may not cover the registration sign 3, i.e. reading of the letters/numbers on the registration sign 3 is not hindered.

It is evident for the skilled person that the arrangement of male attachment device 21A and female attachment device 21B may be inverted i.e. that the passage 203 instead of being fixed to the holding body part 20 may instead be fixed to the fastening body part 21 and in a corresponding manner having one end of the holding body part 20 forming male attachment device intended for introduction through the passage 203 arranged at the fastening body part 21. Likewise it is foreseen that instead of having the holding body part 20 positioned above the registration sign 3 it may instead be positioned below the registration sign whereby no other change is needed than to turn the sign 6 180° when attaching it to the two releasably attachable sign display devices 2. However, mostly a position of the sign 3 above is more preferred than below since normally there may be parts of the vehicle 1 that protrude below and therefore it mostly more suitable to have it positioned above the registration sign 3.

In order to release the releasably attachable sign display devices 2 with the sign 6 from the registration sign 3 it is easily achieved by pressing the resilient locking device 204 whereby the interacting edge 204A of the resilient locking device 204 will pivot out of contact with the interacting member 212 whereby it may easily be detached from male attachment device 21A and then a sufficient distance between the first gripping body member 200 and second gripping member 210 will be achieved to loosen the releasably attachable sign display devices 2 from the registration sign 3.

As mentioned above, thanks to preferably having resilient legs 214 with knobs 214A at the upper end of the male attachment device 21A the fastening body part 21 and holding body part 20 may be connected without interaction of the locking arrangement 21A, 21B, to provide a distance that is sufficient for easily attaching and taking off the releasably attachable sign display devices 2 from the registration sign 3, respectively, since the knobs 214A provide resilient stop members that will facilitate that the holding body part 20 and fastening body part 21 still are connected to each other when the opening distance is achieved, i.e. facilitating easy removal and attachment. Once detached from the registration sign it is easy to just pull the holding body part 20 and fastening body part 21 apart from each other to arrange for compact storage thereof.

However, it is evident for the skilled person that the basic function of the invention is fulfilled without the snap in and stop mechanism 213, i.e. merely having the interacting member 212 in cooperation with a resilient locking device 204, e.g. by having a serrated surface extending from adjacent the end of the male device arranged with the locking arrangement 21A and extending a sufficient distance in a direction against the gripping member 210, such that a locking function may be achieved for registration signs 3 of varying heights.

When using the invention preferably the two releasably attachable sign display devices 2 may firstly be releasably attached by means of the holding members 5 to the sign 6. Thereafter the releasably attachable sign display devices 2, with the sign 6, may easily be attached to the registration sign 3. Taking off the releasably attachable sign display device 2 with the sign 6 is similarly easy to achieve and thanks to easy releasable attachment between the releasably attachable sign display device 2 and the sign 6 the releasably attachable sign display device 2 can thereafter form a very compact assembly that may be easily stored in the car 1.

In Figs. 8-11 there is shown a second embodiment according to the invention which basically has the same function as described above, but where it is shown that the arrangement may be inverted such that the sign 6 may be positioned below the registration sign 3.

In Fig. 8 there is shown a fastening body part 21 according to a further embodiment according to the invention. A basic principle of the fastening body part 21 is the same as has been described above. And therefore merely different features will be described. One difference to be noted is that the end part with the 210 is arranged with a gripping device 210A in order to make it easier to pull the fastening body part 21 into a position wherein the gap between second gripping member 210 and the first gripping member 200 are expanded.

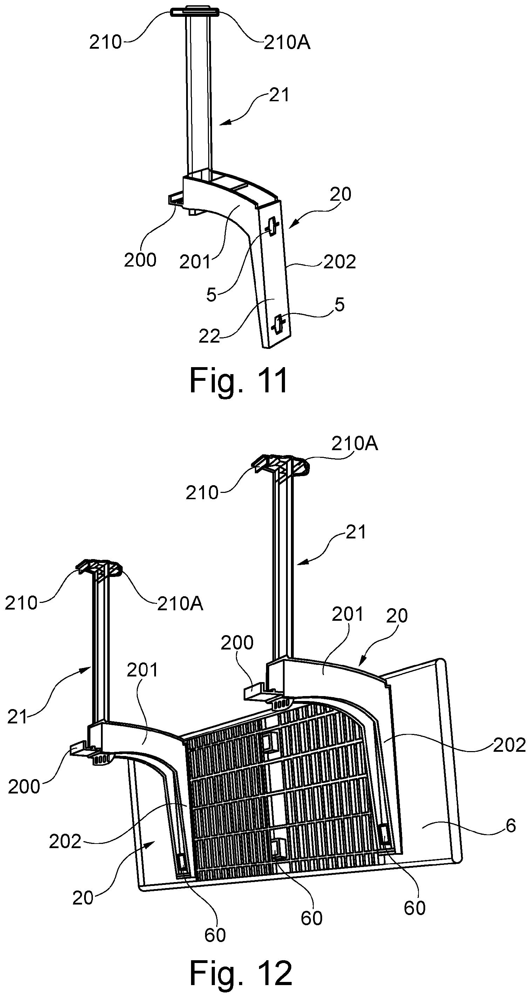

In Figs. 9 and 10 there are shown perspective views of a holding body part 20 intended to cooperate with the fastening body part 21 presented in Fig. 8. Also the basic principle of the holding body part 20 shown in this further embodiment is the same as has been described above and therefore merely differing features will be focused on below. One evident difference is that the holding member 5 instead of being a protruding member protruding from 202 is in the form of a passage intended to cooperate with a male device 60 of a sign 6 (see Fig. 12) Further it is shown that the first gripping member 200 is arranged with a rib 200A, which may provide the advantage that signs 6 of different thickness may be gripped in a stable manner. Moreover, it is foreseen that the passage 203 is arranged by means of a transversal plate 209, which preferably also forms support base for at least one anchoring device 201A, e.g. in the form of a hook. As shown, there are preferably two anchoring devices 201A which provides the advantages that two separate resilient members 4 may be used providing extra security. Further it is shown that supporting side panels 201B, 202B are used having L-shape that run along the sides of both the distance body portion 201 and the holding body portion, which may improve strength and stability of the holding body part 20. Preferably, the width w of the said side panels 201B, 202B are many times larger than the thickness t, preferably at least w > 2t.

In Fig. 11 there is a perspective view where the holding body part 20 and the fastening body part 21 have been connected and also presenting that the holding body part 20 may be positioned below the registration plate.

Further, Fig. 12 shows a perspective view where a sign 6 has been attached to the holding body part 20 by means of a snapping in male device 60 of the sign 6 into the passages 5 of the holding body part 20.

It is evident that the releasably attachable sign display device 2 may be produced in many different materials to fulfil the purpose of the invention. However it is foreseen that it is preferred to use some kind of polymeric material and that the production may be achieved by form molding. It is also foreseen that different polymers may be used (reinforced or unreinforced) that may produce suitable resiliency and rigidity to optimize and to adapt to different needs.

It should be understood, of course, that the foregoing relates to exemplary embodiments of the invention and that modifications may be made without departing from the spirit and scope of the invention as set forth in the following claims.

## Claims

1. A releasably attachable sign display device (2), comprising:
a holding body part (20) and a fastening body part (21) arranged to be releasably attachable to each other by means of a releasable attachment arrangement (21A, 21B, wherein said holding body part (20) is arranged with at least one sign holding member (5) arranged to securely hold a sign (6) against an outer surface (22) of said holding body part (20), wherein said fastening body part (21) includes a second gripping member (210) arranged to grip around a first horizontal edge (30) of a vehicle registration sign (3) and that said holding body part (20) includes a first gripping member (200) arranged to grip around an opposite second horizontal edge (31) of said vehicle registration sign (3), wherein said releasable attachment arrangement (21A, 20B) is arranged to securely fasten the sign display device (2) to a vehicle (1), **characterized in that** the said fastening body part (21) is transparent and arranged to visibly extend across the front side of said registration sign (3) and that said holding body portion (202) extends upwardly arranged to position a major part of said sign (6) above said registration sign (3) or extends downwardly arranged to position a major part of said sign (6) below said registration sign (3).

2. The releasably attachable sign display device of claim 1, wherein said releasable attachment arrangement (21A, 20B) includes a male attachment device (21A) arranged at one end of one of the body parts (20, 21) and an interfitting female attachment device (20B) arranged at one end of the other body part (20, 21), wherein preferably the length (L) of said body part (20, 21) including said male device (21A) is arranged to be sufficient to maintain connection between said male and female devices (21A, 20B) when passing said gripping members (200, 210) past the edges (30, 31) of a registration sign (3).

3. The releasably attachable sign display device of claim 1 or 2, wherein said male attachment device (21A) is in the form of an at least partly solid end body part (211, 213) interacting with a passage (203) of said female attachment device (20B) and said at least partly solid end body part (211, 213) is arranged with at least one interacting member (212) arranged to interact with at least one resilient locking device (204).

4. The releasably attachable sign display device of claim 1, 2 or 3, wherein said male attachment device includes snap in and stop device (213) interacting with said passage (203) arranged to provide connection between the two body parts (20, 21) providing a large distance between the gripping members (200, 210) and that said resilient locking device (204) may lockingly interact with said interacting member (212) to obtain a smaller distance between the gripping members (200, 210), wherein preferably said second gripping member (200) and said passage (300) are integrated in one integral body part.

5. The releasably attachable sign display device of claim 1, 2, 3, 4 or 5, wherein said holding body portion (202) is arranged with said at least one sign holding member (5) at a position arranged to position a lower edge (6A) of said sign (6) adjacent or above an upper edge (3B) of said registration sign (3) and/or to position an upper edge (6B) of said sign (6) adjacent or below a lower edge (3A) of said registration sign (3).

6. The releasably attachable sign display device of claim 1, 2, 3, 4 or 5, wherein said holding body part (20) includes a holding body portion (202) at an opposite end thereof in relation to said second gripping member (200) and also a distance body portion (201) in between said holding body portion (202) and said second gripping member (200), wherein said distance body portion (201) is arranged to provide a positioning of the holding body portion (202) at a horizontal distance (X) outwardly from the plane of attachment (PA) of said releasable attachment arrangement (21A, 20B), wherein preferably said horizontal distance (X) is provided having said distance body portion (201) extending at angle (α) in relation to a plane (VP) of said holding body portion (202), wherein more preferred said angle (α) is acute, even more preferred in the range of 30-70°.

7. The releasably attachable sign display device of claim 1,2, 3, 4, 5 or 6, wherein said holding body portion (202) extends upwardly arranged to have its lowest edge positioned a distance (Y) above an upper edge of an upper gipping member (200) or to have its uppermost edge positioned a distance (Y) above an upper edge of an upper gipping member (200), wherein preferably Y is at least 10 mm, more preferred at least 20 mm, even more preferred within the range of 30 -100 mm.

8. The releasably attachable sign display device of any preceding claim, wherein said gripping members (200, 210) present a U-shape.

9. The releasably attachable sign display according to any preceding claim, wherein the maximum width (W) of said sign display device (2) is less than 50%, preferably less than 40%, more preferred 30% or less, of the length (L, H) of any of said holding body part (20) or said fastening body part (21), wherein preferably the length (L) of said holding body part (20) is within the range of +- 30%, preferably within the range of +- 20% of the length (H) of said fastening body part (21).

10. The releasably attachable sign display according to any preceding claim, wherein said at least one sign holding member (5) comprises a body (51,50) including an outer snap-in body member (51) that protrudes out from said outer surface (22), wherein preferably there are arranged at least two such sign holding members (5).

11. A sign holding arrangement including at least two releasably attachable sign display devices (2) according to any of claims 1-9, wherein preferably said releasably attachable sign display devices (2) when put into position are arranged to form a gap (G) between an inner surface (23) of the holding part (20) and an outer surface of the vehicle.
